# FASCICULE DE BREVET EUROPEEN

(11) **EP 0 384 929 B1**
(45) Date de publication et mention de la délivrance du brevet: **12.05.1993**
(21) Numéro de dépôt: 89103603.0
(22) Date de dépôt: 02.03.1989
(51) Int. Cl.: A21C 15/00, A23G 3/20

(54) **Dispositif, installation et procédé de fabrication de gâteaux extrudés**
Vorrichtung, Anlage und Verfahren zur Herstellung von gespritzten Kuchen
Device, apparatus and process for producing extruded cakes

(43) Date de publication de la demande: 05.09.1990
(73) Titulaire: FRISCO-FINDUS AG, CH-9400 Rorschach (CH)
(72) Inventeur: Daouse, Alain, F-60430 Noailles (FR)

(56) Documents cités:
- EP-A- 0 130 748
- DE-C- 500 761
- GB-A- 23 156
- GB-A- 192 119
- GB-A- 2 060 468
- US-A- 2 509 533

## Description

L'invention concerne un dispositif de fabrication de gâteaux extrudés par dépose d'un boudin de matière pâteuse, notamment de crème glacée à partir d'un ajutage sur un convoyeur en défilement, une installation comportant ce dispositif et un procédé de fabrication de gâteaux extrudés.

Les gâteaux extrudés, du type des bûches de Noël sont fabriqués en continu par extrusion d'un boudin de matière pâteuse au travers d'un ajutage fixe (voir p.ex. US-A-4751878, qui divulgue le préamble des revendications indépendents 1 et 8). La crème glacée, par exemple à une température de -6 à -7°C est suffisamment malléable pour pouvoir être mise en forme. La forme est donnée par le profil denté d'une filière fixe qui produit sur l'article des côtes rectilignes et parallèles. Pour compléter le décor, on place à la sortie de l'extrudeur des dispositifs auxiliaires de décoration du dessus du gâteau qui peuvent être par exemple des douilles pâtissières par lesquelles on extrude par exemple de la crème glacée ou de la crème chantilly. De tels dispositifs peuvent être animés de mouvements de va-et-vient. Par ailleurs, on peut prévoir également des dispositifs de dépose d'éléments décoratifs, par exemple des champignons, feuilles de houx, arbrisseaux en sucre ou en massepain. Dans certains cas, les douilles pénètrent dans le boudin afin de former des cavités imitant les noeuds d'une branche d'arbre. En dépit de toutes les décorations annexes, les côtes à la surface du boudin constituent un décor monotone fort éloigné du relief naturel de l'écorce d'arbre.

Le but de l'invention est de produire en continu un boudin avec un décor de surface imitant l'écorce d'arbre sans recourir à l'adjonction auxiliaire de matière pâteuse.

A cet effet, le dispositif selon l'invention comporte une pièce fixe en forme générale d'arceau à profil denté sensiblement vertical, ledit arceau comportant une base rectiligne, des parties latérales et une partie supérieure courbes.

Il est caractérisé par le fait que l'ajutage comporte en outre des pièces mobiles, contre chaque côté de l'arceau et contre sa partie supérieure constituées de peignes courbes à profils dentés, montées pivotantes autour d'axes excentrés par rapport à l'axe central de l'arceau et susceptibles d'être animées d'un mouvement de rotation alternative, de sorte que lesdits peignes suivent la courbure des parties latérales et supérieure de la pièce fixe.

Par matière pâteuse selon l'invention, on entend une composition grasse ou sucrée, par exemple du type de celles qui sont utilisées en pâtisserie pour la garniture des gâteaux, par exemple la crème au beurre. De préférence, il s'agit d'une composition foisonnée de crème glacée ou de sorbet.

L'invention concerne également une installation de fabrication de gâteaux extrudés, caractérisée par le fait qu'elle comprend le dispositif précédent, un convoyeur en défilement sous ledit dispositif et une station mobile portant au dessus du convoyeur des douilles délivrant une matière pâteuse, susceptible d'être animée d'un mouvement tel que, à partir d'une position initiale, les douilles descendent et pénètrent verticalement dans le boudin, y creusent des trous qui se remplissent de matière pâteuse tout en suivant le convoyeur, puis sont relevées verticalement et retournent à leur position initiale.

L'invention concerne enfin un procédé de fabrication de gâteaux extrudés dans lequel on extrude en continu un boudin de matière pâteuse à partir d'un ajutage fixe en forme d'arceau à profil denté, caractérisé par le fait que l'on déforme la surface en reliefs obtenue au moyen de peignes épousant la courbure de l'arceau, de sorte que les reliefs se chevauchent et déforment ainsi la surface.

Les dessins annexés montrent à titre d'exemple un mode de réalisation de l'invention. Dans ces dessins,
La figure 1 est un schéma de l'installation,
La figure 2 est une coupe suivant AA de la figure 3 de l'équipement contenant les pièces mobiles du dispositif,
La figure 3 est une coupe selon BB de la figure 2 et
La figure 4 est une coupe partielle de l'ajutage avec les peignes selon CC de la figure 3.

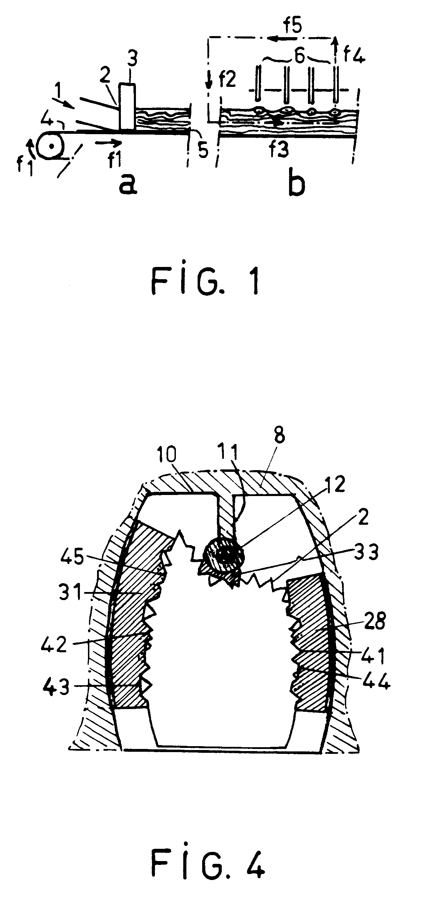

A la figure 1 en a, la matière pâteuse 1, par exemple la crème glacée sort en boudin continu de l'ajutage denté fixe 2, par exemple en acier inoxydable et sa surface est déformée sous l'action de peignes mobiles contenus dans l'équipement 3 de manière à réaliser l'écorce. Le boudin ainsi déformé est repris par le tapis transporteur 4 en défilement suivant f1 sur lequel on a préalablement placé une bande de papier 5. En b, un ensemble de douilles 6 pénètrent dans le boudin par un déplacement vertical rapide (f2), se déplaçent horizontalement en suivant le tapis transporteur pendant qu'on déverse de la matière pâteuse dans les orifice creusés dans le boudin par les douilles (f3) et, lorsque les orifices sont remplis de matière pâteuse, l'ensemble de douilles est relevé verticalement rapidement (f4), puis retourne par un mouvement horizontal rapide à sa position initiale (f5). On forme ainsi les noeuds de la bûche.

Ensuite, on découpe le boudin en tronçons et on dépose le cas échéant sur les bûches obtenues des éléments décoratifs complémentaires de manière connue et non représentée. Le boudin conduit vers l'ajutage peut être formé de plusieurs masses adjacentes ou de préférence coaxiales de matière pâteuse de couleurs et de parfums différents les uns des autres par co-extrusion. Les matières pâteuses peuvent contenir des morceaux, par exemple de confiserie, de truffe, de fruits secs ou confits, éventuellement aromatisés à la liqueur.

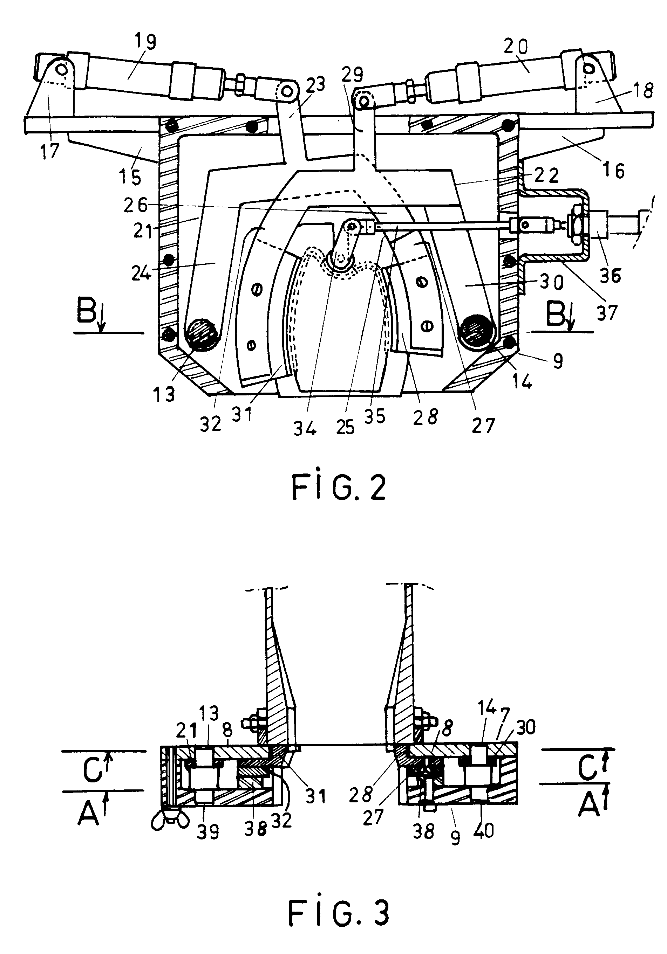

Aux figures 2, 3 et 4, l'équipement mobile 3 du dispositif est constitué d'un boîtier 7 comprenant une platine 8 et un couvercle 9. La platine 8, par exemple en acier inoxydable, sert à la fixation de l'ensemble des pièces mobiles sur l'extrudeur ainsi qu'à la fixation des vérins actionnant certaines des pièces mobiles comme expliqué ci-après. La platine 8 est percée d'un arceau 10 dont les arcs latéraux sont parallèles à la ligne de base des dents de l'ajutage 2 en retrait de cette ligne. La partie supérieure de l'arceau 10 comprend une patte 11 percée en 12. De chaque côté de l'arceau, la platine 8 est percée de trous 13 et 14. A sa partie supérieure, la platine 8 comporte des consoles 15 et 16 portant des fourches 17 et 18, sur lesquelles sont articulées les vérins 19 et 20 par l'une de leurs extrémités. A leur autre extrémité les vérins 19 et 20 sont articulés sur les pièces intermédiaires de manoeuvre 21 et 22. La pièce 21, en forme générale de fourche, comporte une patte 23 reliée au vérin 19. Un bras rectiligne 24 de la fourche, est articulé sur la platine 8 au moyen d'un axe passant par le trou 13. L'autre bras 25 de la fourche est curviligne en deux éléments, l'un 26 situé dans le plan de la patte 23 et du bras 24, l'autre 27 en avant de ce plan d'une épaisseur de pièce 21. L'élément 27 sert de support au peigne denté 28 dont le profil est en forme de L. Une fois fixé sur le dos de son support, le peigne 28 est disposé de façon telle que la face arrière de ses dents est adjacente à l'arc latéral de droite de l'arceau 10 dans le plan de la face arrière de la platine 8.

La pièce intermédiaire de manoeuvre 22 joue le même rôle que la pièce 21 de l'autre côté de l'arceau 10. Elle est reliée au vérin 20 par la patte 29, est articulée sur la platine 8 par son bras rectiligne 30 au moyen d'un axe passant par le trou 14 et porte le peigne denté 31 sur le dos de son bras curviligne 32 qui est dans le plan de la patte 29. Le bras 30 est en retrait d'une épaisseur de pièce 22. De cette façon, la face arrière des dents du peigne 31 est adjacente à l'arc latéral de gauche de l'arceau 10 dans le plan de la face arrière de la platine 8.

Un peigne 33 est articulé sur la patte 11 de la platine 8 autour d'un axe passant par le trou 12. Il est solidaire du levier 34, lui-même relié par l'intermédiaire d'une biellette 35 au vérin 36. Le vérin 36 est fixé sur l'entretoise 37, laquelle est fixée à son tour sur une surface latérale du couvercle 9.

Le couvercle 9 est fixé, par exemple vissé sur la platine 8. Il est de préférence en matière plastique, par exemple en polytétrafluoro-éthylène. Il est percé par un arceau de même contour général que l'arceau 10 en regard de celui-ci. Il comporte des distanceurs 38 aidant à maintenir en place les pièces 21 et 22. Il est percé des trous 39 et 40 en regard des trous 13 et 14 de la platine 8 et dans lesquels viennent se loger les axes de pivotement des pièces 21 et 22.

Le fonctionnement du dispositif est le suivant:
Un boudin de crème glacée à -6°C/-7°C sort par l'ajutage fixe denté 2. L'arceau est sensiblement vertical et perpendiculaire à la direction de défilement du tapis 4. Il comporte des arcs latéraux convexes et une partie supérieure partiellement concave. Du fait de la fixité du profil, les côtes imprimées sur le boudin sont rectilignes et parallèles. Les vérins 19 et 20, par le va-et-vient de leur piston communiquent aux pièces intermédiaires de manoeuvre 21 et 22 un mouvement de rotation alternative de faible amplitude autour de leurs axes de pivotement respectifs en 13 et 14. Ainsi les peignes latéraux 28 et 31 suivent la courbure des arcs latéraux de l'arceau.

Les peignes 28 et 31 sont constitués de dents de même échancrure par exemple 41 et de dents d'échancrure inférieure par exemple 42 à celles des dents de l'arceau. A certains endroits, les dents sont reliées par des arcs à leur base, par exemple 43, à une hauteur intermédiaire, par exemple 44 ou encore à leur sommet, par exemple 45.

Les peignes, par superposition avec le marquage produit par la filière fixe, font varier les épaisseurs et hauteurs des côtes. De plus, du fait de leur mouvement, ces peignes transforment les lignes droites des côtes en lignes brisées ou courbes, avec un certain chevauchement. Les peignes peuvent se déplacer dans le même sens ou en sens opposé. Leur changement de direction peut être progressif ou brusque, produisant ainsi des côtes courbes ou brisées. Leur mouvement ne doit pas être trop rapide, pour éviter de créer une répétitivité du décor. La fréquence de leur mouvement est avantageusement de 15 à 30 allers/retours par min. pour un débit de crème glacée d'environ 1800 l/h avec une vitesse du tapis transporteur d'environ 7 m/min.

De la manière expliquée précédemment en liaison avec les peignes latéraux, le peigne 33 est animé d'un mouvement de rotation alternatif le long de la portion d'arc concave de l'arceau sous l'action du vérin 36 par l'intermédiaire de la biellette 35 et du levier 34.

De préférence, les vérins 19, 20 et 36 sont commandés pneumatiquement indépendamment les uns des autres. D'une manière particulièrement préférée, la pression de l'air dans le circuit pneumatique est maintenue basse, ce qui produit des mouvements saccadés et aléatoires propices à la réalisation d'un décor non répétitif.

En variante, on peut relier de manière connue et non représentée, par exemple par un embiellement approprié, les pièces d'actionnement des peignes 21, 22 et 34, qui peuvent ainsi être animées à l'aide d'un seul vérin. On gagne en simplicité mais on perd en variété de décoration.

Bien entendu, le mécanisme d'actionnement des peignes peut être non pneumatique, par exemple comprendre de manière connue un système purement mécanique de commande par cames.

## Revendications

1. Dispositif de fabrication de gâteaux extrudés par dépose d'un boudin de matière pâteuse, notamment de crème glacée, à partir d'un ajutage sur un convoyeur en défilement, comportant un ajutage comprenant une pièce fixe (2) en forme générale d'arceau (10) à profil denté, sensiblement vertical, ledit arceau comportant une base rectiligne, des parties latérales et une partie supérieure courbes, caractérisé par le fait que l'ajutage comporte en outre des pièces mobiles, contre chaque côté de l'arceau et contre sa partie supérieure constituées de peignes courbes (28,31,33) à profils dentés, montées pivotantes autour d'axes excentrés (12,13,14) par rapport à l'axe central de l'arceau et susceptibles d'être animées d'un mouvement de rotation alternative, de sorte que lesdits peignes (28,31,33) suivent la courbure des parties latérales et supérieure de la pièce fixe (2).

2. Dispositif selon la revendication 1, caractérisé par le fait que l'arceau (10) comporte des parties latérales convexes et une partie supérieure partiellement concave.

3. Dispositif selon la revendication 1 ou 2, caractérisé par le fait que le profil denté des peignes (28,31) placés contre les côtés de l'arceau est constitué de dents de même échancrure (41) que celle des dents de l'arceau et de dents d'échancrure inférieure (42) à celles de l'arceau, reliées à certains endroits par des lignes courbes à leur base (43), à une hauteur intermédiaire (44) ou à leur sommet (45).

4. Dispositif selon la revendication 1, caractérisé par le fait que les peignes (28,31,33) sont commandés par des vérins (19,20,36) pneumatiques de manière indépendante les uns des autres.

5. Dispositif selon la revendication 1, caractérisé par le fait que les peignes (28,31,33) sont rendus solidaires les uns des autres par un embiellement et commandés par un seul vérin pneumatique.

6. Dispositif selon la revendication 4, caractérisé par le fait que la pression de l'air des vérins (19,20,36) est réglée de telle manière que les mouvements des peignes (28,31,33) soient saccadés et aléatoires.

7. Installation de fabrication de gâteaux extrudés, caractérisée par le fait qu'elle comprend:
- un dispositif selon la revendication 1,
- un convoyeur (4) en défilement sous ledit dispositif et
- une station mobile portant au dessus du convoyeur des douilles (6) délivrant la matière pâteuse (1), susceptible d'être animée d'un mouvement tel que, à partir d'une position les douilles (6) descendent et pénètrent verticalement dans le boudin (1), y creusent des trous qui se remplissent de matière pâteuse tout en suivant le convoyeur (4), puis sont relevées verticalement et retournent à leur position initiale.

8. Procédé de fabrication de gâteaux extrudés, dans lequel on extrude en continu un boudin (1) de matière pâteuse à partir d'une pièce fixe (2) en forme d'arceau à profil denté, caractérisé par le fait que l'on déforme la surface en reliefs obtenue au moyen de peignes (28,31,33) épousant la courbure de l'arceau, de sorte que les reliefs se chevauchent et déforment ainsi la surface.

9. Procédé selon la revendication 8, caractérisé par l'étape supplémentaire de formation de noeuds dans la surface par pénétration de douilles (4) dans le boudin (1) et remplissage des trous ainsi formés avec la matière pâteuse à partir de ces douilles (4), de manière à imiter l'écorce d'arbre.

## Claims

1. A device for the production of extruded cakes by deposition of a strand of paste-form material, more especially ice cream, from an extrusion die onto a moving conveyor, comprising a die incorporating a fixed element (2) generally in the shape of an arch (10) with a substantially vertical toothed profile, the arch comprising a straight base, curved lateral parts and a curved upper part, characterized in that the die additionally comprises moving parts against each side of the arch and against its upper part in the form of curved combs (28,31,33) with toothed profiles which are mounted to pivot about eccentric axes (12,13,14) relative to the central axis of the arch and to which an alternating rotational movement is imparted so that the combs (28,31,33) follow the curvature of the lateral and upper parts of the fixed element (2).

2. A device as claimed in claim 1, characterized in that the arch (10) comprises convex lateral parts and a partly concave upper part.

3. A device as claimed in claim 1 or 2, characterized in that the toothed profile of the combs (28,31) placed against the sides of the arch is formed by teeth having the same indentation (41) as the teeth of the arch and by teeth having a lower indentation (42) than the teeth of the arch which are connected at certain places by arcs at their base (43), at an intermediate level (44) or at their apex (45).

4. A device as claimed in claim 1, characterized in that the combs (28,31,33) are controlled by pneumatic jacks (19,20,36) which are independent of one another.

5. A device as claimed in claim 1, characterized in that the combs (28,31,33) are connected to one another by connecting rods and controlled by a single pneumatic jack.

6. A device as claimed in claim 4, characterized in that the air pressure of the jacks (19,20,36) is controlled in such a way that the movements of the combs (28,31,33) are sudden and random.

7. An installation for the production of extruded cakes, characterized in that it comprises:
- the device claimed in claim 1,
- a conveyor (4) circulating beneath the device and
- a moving station comprising, above the conveyor, piping nozzles (6) which deliver the paste-form material (1) and which are moved in such a way that, from a starting position, the piping nozzles (6) descend and penetrate vertically into the strand (1), form holes therein, which are filled with paste-form material, while following the conveyor (4) and are then raised vertically and return to their starting position.

8. A process for the production of extruded cakes, in which a strand (1) of paste-form material is continuously extruded from a fixed nozzle (2) in the form of an arch with a toothed profile, characterized in that the surface is deformed into reliefs obtained by means of combs (28,31, 33) which follow the curvature of the arch so that the reliefs overlap and thus deform the surface.

9. A process as claimed in claim 8, characterized by the additional step of forming knots in the surface by penetration of the piping nozzles (4) into the strand (1) and filling of the holes thus formed with paste-form material from the piping nozzles (4) to imitate the bark of a tree.

## Patentansprüche

1. Vorrichtung zur Herstellung von stranggepreßten Kuchen durch Ablegen eines Strangs aus einer teigigen Masse, insbesondere einer gefrorenen Creme, aus einer Düse auf einem Laufförderer,
wobei die Vorrichtung eine Düse mit einem festen Teil (2) umfaßt, das generell die Form eines im wesentlichen vertikalen Bügels (10) mit gezahntem Profil hat, der eine geradlinige Basis, gektümmte Seitenteile und einen gektümmten oberen Teil besitzt,
**dadurch gekennzeichnet,**
daß die Düse außerdem bewegliche Teile aufweist, die an jedem Seitenteil und an dem oberen Teil des Bügels anliegen und aus bogenförmigen Kämmen (28, 31, 33) mit gezahntem Profil bestehen, die um zur zentralen Achse des Bügels exzentrische Achsen (12, 13, 14) verschwenkbar angeordnet sind und mit einer altemierenden Drehbewegung beaufschlagbar sind, bei der die Kämme (28, 31, 33) der Krümmung der Seitenteile und des oberen Teils des festen Teils (2) folgen.

2. Vorrichtung nach Anspruch 1, dadurch gekennzeichnet, daß der Bügel (10) konvexe Seitenteile und ein teilweise konkaves oberes Teil aufweist.

3. Vorrichtung nach Anspruch 1 oder 2, dadurch gekennzeichnet, daß das gezahnte Profil der Kämme (28, 30), die an den Seitenteilen des Bügels anliegen, aus Zähnen besteht, die dieselbe bogenförmige Aussparung (41) haben wie die Zähne des Bügels, sowie aus Zähnen mit einer bogenförmigen Aussparung (42), die kleiner ist als die der Zähne des Bügels und die an bestimmten Stellen durch gekrümmte Linien an ihrer Basis (43), in einer mittleren Höhe (44) oder an ihrem Scheitel (45) miteinander verbunden sind.

4. Vorrichtung nach Anspruch 1, dadurch gekennzeichnet, daß die Kämme (28, 31, 33) unabhängig voneinander durch pneumatische Zylinder (19, 20, 36) bewegt werden.

5. Vorrichtung nach Anspruch 1, dadurch gekennzeichnet, daß die Kämme (28, 31, 33) durch ein Gestänge fest miteinander verbunden sind und durch einen einzigen pneumatischen Zylinder bewegt werden.

6. Vorrichtung nach Anspruch 4, dadurch gekennzeichnet, daß der Luftdruck der Zylinder (19, 20, 36) so geregelt wird, daß die Kämme (28, 31, 33) ruckartige und zufällige Bewegungen ausführen.

7. Anlage zur Herstellung von stranggepreßten Kuchen,
gekennzeichnet durch
eine Vorrichtung nach Anspruch 1,
einen unter dieser Vorrichtung angeordneten Laufförderer (4) und
eine bewegliche Station, die oberhalb des Förderers Hülsen (6) trägt, die die teigige Masse (1) liefern und mit einer solchen Bewegung beaufschlagbar sind, daß sie aus einer Position abgesenkt werden und vertikal in den Strang (1) eindringen, dort Löcher erzeugen, die sich mit teigiger Masse füllen, wobei die Hülsen dem Förderer (4) folgen, dann vertikal angehoben werden und in ihre Ausgangsposition zurückkehren.

8. Verfahren zur Herstellung von stranggepreßten Kuchen, bei dem man einen Strang (1) aus teigiger Masse aus einem festen Teil (2) in Form eines Bügels mit gezahntem Profil extrudiert, dadurch gekennzeichnet, daß man die Oberfläche zu reliefartigen Erhebungen verformt, die mit Hilfe von an die Krümmung des Bügels angepaßten Kämmen (28, 31, 33) gewonnen werden, wobei die reliefartigen Erhebungen einander übergreifen und so die Oberfläche verformen.

9. Verfahren nach Anspruch 8, gekennzeichnet durch den weiteren Verfahrensschritt, daß durch das Eindringen von Hülsen (4) in den Strang (1) und durch Füllen der dadurch erzeugten Löcher mit der teigigen Masse aus den Hülsen (4) Äste in der Oberfläche gebildet werden, so daß eine Baumrindenstruktur imitiert wird.
